# EUROPÄISCHE PATENTSCHRIFT

(11) **EP 2 824 307 B1**
(45) Veröffentlichungstag und Bekanntmachung des Hinweises auf die Patenterteilung: **09.03.2016**
(21) Anmeldenummer: 14172949.1
(22) Anmeldetag: 18.06.2014
(51) Int. Cl.: F02G 5/02, F04B 45/02

(54) **Wärmerückgewinnungssystem für einen Verbrennungsmotor**
Heat recovery system for an internal combustion engine
Système de récupération de chaleur pour un moteur à combustion interne

(30) Priorität: 11.07.2013 DE 102013213575
(43) Veröffentlichungstag der Anmeldung: 14.01.2015
(73) Patentinhaber: Mahle International GmbH, 70376 Stuttgart (DE)
(72) Erfinder: Eggler, Jochen, 73760 Ostfildern (DE); Elsäßer, Alfred, 75210 Keltern (DE); Maisch, Christian, 73230 Kirchheim (DE); Senjic, Sascha, 70376 Stuttgart (DE)
(74) Vertreter: BRP Renaud & Partner mbB Rechtsanwälte Patentanwälte Steuerberater

(56) Entgegenhaltungen:
- US-A1- 2008 008 605
- US-A1- 2013 074 497

## Beschreibung

Die Erfindung betrifft ein Wärmerückgewinnungssystem für einen Verbrennungsmotor nach dem Oberbegriff des Anspruchs 1.

Ein Verbrennungsmotor ist eine Verbrennungskraftmaschine, die chemische Energie eines Kraftstoffs durch Verbrennung in mechanische Arbeit umwandelt. Die Verbrennung findet dabei im Brennraum statt, in dem ein Gemisch aus Kraftstoff und Umgebungsluft gezündet wird. Die Wärmeausdehnung des durch die Verbrennung heißen Verbrennungsabgases wird genutzt, um einen Kolben zu bewegen.

Aus dem Stand der Technik sind insbesondere Verbrennungsmotoren bekannt, die bis zu 38,5 % der im Kraftstoff gespeicherten Energie zur Bewegung des Kolbens einsetzen. Die restliche im Rahmen der Verbrennung erzeugte Energie wird - im Falle eines gekühlten Motors neben der Kühlflüssigkeit - vor allem durch entweichende Verbrennungsabgase aus dem Motor abgeleitet. Zur Reduzierung derartiger Wärmeverluste wurde daher vorgeschlagen, einen gattungsgemäßen Verbrennungsmotor um ein geeignetes Wärmerückgewinnungssystem zu ergänzen, (siehe z.B Dokument US 2013/0074497 A1)

Ein derartiges System bedient sich typischerweise einer als Wärmeübertrager, Wärmetauscher oder Wärmeaustauscher bezeichneten Vorrichtung, die thermische Energie vom Verbrennungsraum des Motors auf einen diesen umströmenden Wärmeträger überträgt. Problematisch ist dabei die Wahl des Wärmeträgers, der sich als solcher einerseits durch einen hohen Siedepunkt und Wärmeübergangskoeffizienten sowie hohe Wärmekapazität und -leitfähigkeit, andererseits durch niedrige Viskosität, Entzündlichkeit, Toxizität sowie einen niedrigen Gefrierpunkt auszeichnen sollte. Aus dem Stand der Technik bekannte Wärmeübertrager verwenden daher neben konventionellen Kältemitteln beispielsweise Wasser, Ethanol, Methanol, Ammoniak oder auf diesen Flüssigkeiten basierende Gemische als Wärmeträger.

So offenbart etwa US 2008/0008605 A1 einen auf einer Pumpe basierenden Wärmeübertrager, bei dem der bewegliche Teil ein Metallbalg ist, der abwechselnd mit Hydraulikflüssigkeit unter hohem Druck gefüllt und entleert wird. Dabei wird die Menge an Kraftstoff in der Kammer, in der sich der Balg bewegt, stromaufwärts von einem Magnetventil bestimmt, das durch einen Computer zur Überwachung des Motors gesteuert wird. Die vorgeschlagene Pumpe umfasst mindestens zwei Pumpeinheiten, die durch einen einzigen, den beiden Einheiten gemeinsamen Einlass gespeist werden.

Auch FR 2 828 240 - A1 schlägt eine Hydraulikpumpe für spezielle Hochdruck-Flüssigkeiten wie Benzin vor. Dabei ist jeder Zylinder der Hydraulikpumpe einerseits mit einem Reservoir und andererseits mit einem Rückschlagventil verbunden, die wahlweise unter der Wirkung einer mittels eines Proportionalmagneten gesteuerten Verteilvorrichtung in Fluidverbindung treten.

Schließlich beschreibt DE 103 06 146 A1 einen Niederdruckspeicher für eine Hochdruckkolbenpumpe zum Pumpen von Kraftstoff mit einer flüssigkeitsdichten elastischen Trennstruktur, die eine erste Seite und eine zweite Seite aufweist, wobei die erste Seite ein Teilvolumen des Niederdruckspeichers begrenzt, das mit einer Niederdruckseite der Hochdruckkolbenpumpe hydraulisch verbunden ist. Der Niederdruckspeicher zeichnet sich dadurch aus, dass die elastische Trennstruktur das Teilvolumen gasdicht abgrenzt.

Ein Nachteil dieser herkömmlichen Wärmerückgewinnungssysteme liegt dabei im langfristigen Verschleiß der solcherart umströmten beweglichen Teile des Wärmerückgewinnungssystems. Insofern weisen die genannten Flüssigkeiten meist physikalische Kennwerte hinsichtlich Dichte, Viskosität, Pourpoint, Anilin-, Tropf- und Stockpunkt sowie Neutralisationsvermögen auf, die sie als Schmierstoff nur bedingt geeignet erscheinen lassen. Auch die chemische Verträglichkeit mit gebräuchlichen Antriebskomponenten ist bei einigen der verwendeten Wärmeträger nicht als unkritisch zu bewerten. Die tribologische Belastung des Wärmerückgewinnungssystems wird durch das zum Betrieb des Wärmeübertragers erforderliche Druckniveau des Wärmeträgers je nach Ausgestaltung tendenziell weiter verstä rkt.

Aufgabe der Erfindung ist daher die Schaffung eines Wärmerückgewinnungssystems für einen Verbrennungsmotor, welches den beschriebenen Nachteil überwindet.

Gelöst wird diese Aufgabe durch ein Wärmerückgewinnungssystem mit den Merkmalen des Anspruchs 1.

Grundgedanke der Erfindung ist demnach, das Wärmerückgewinnungssystem mit einer Verdrängerpumpe auszurüsten, deren Pumpenantrieb durch eine impermeable Trennmembran fluiddicht von dem Wärmeträger getrennt ist. Die somit erreichte Medientrennung ermöglicht es dem Fachmann, einen unter funktionellen Gesichtspunkten optimierten Wärmeträger zur Füllung des Wärmerückgewinnungssystems weitgehend unabhängig von der konstruktiven Beschaffenheit des Pumpenantriebs auszuwählen, ohne dass ein Kontakt zwischen Wärmeträger und Pumpenantrieb mit der möglichen Folge einer etwa chemischen Berührungsreaktion drohte. Dabei empfiehlt sich zur Herstellung der Trennmembran die Verwendung eines metallischen Werkstoffs oder entsprechende Kunststoffe wie z.B. PTFE-Membrane. Darüber hinaus verfügen einschlägig bekannte Metallverbindungen über eine hohe Duktilität, sodass eine entsprechende Membran unter den im Pumpbetrieb auftretenden periodischen Belastungen zahlreiche elastische Verformungszyklen durchlaufen kann, ohne dass ihr Dichtegrad durch Bildung von Rissen oder anderweitiges Materialversagen merklich beeinträchtigt wird. Ähnliche Eigenschaften weisen auch entsprechende Kunststoffe auf. Schließlich eröffnet die Verwendung eines metallischen Werkstoffs dem Fachmann eine Vielzahl metallurgischer Verarbeitungsverfahren zur flexiblen Ausgestaltung einer Trennmembran.

In einer bevorzugten Ausführungsform bildet die Trennmembran dabei die Wandung eines metallischen Faltenbalgs. Die Nutzung eines derartigen Faltenbalgs zur Abdichtung einer Pumpe wurde grundsätzlich bereits in DE 100 35 625 A1 erörtert, wobei die zitierte Offenlegungsschrift deren Verwendung im Rahmen des Einspritzsystems eines Verbrennungsmotors vorschlägt. Die erfindungsgemäße Anwendung einer Faltenbalgpumpe zur Wärmerückgewinnung überträgt den Vorteil einer verbesserten Abdichtung des Pumpenraums auf das vorliegende Szenario.

Ein solcher Pumpenantrieb kann etwa auf einem im Faltenbalg beweglich gelagerten Hubkolben beruhen, wobei innerhalb des Faltenbalgs zwischen dem Hubkolben und der Trennmembran verbleibende Hohlräume mittels einer geeigneten Hydraulikflüssigkeit ausgefüllt werden. Die beim Antrieb der Verdrängerpumpe durch den Hubkolben ausgeübte Kraft überträgt sich in diesem Fall über die Hydraulikflüssigkeit auf den Faltenbalg, dessen Ausdehnung wiederum unmittelbar den fluidischen Wärmeträger verdrängt, welcher den Faltenbalg auf der gegenüberliegenden Seite der Trennmembran umströmt. Die beschriebene hydromechanische Verbindung zwischen An- und Abtrieb gestattet dem Fachmann auf dem Gebiet der Antriebstechnik eine optimale konstruktive Anpassung des Wärmerückgewinnungssystems an übergeordnete Raumvorgaben. Gleichwohl lässt sich auf diese Weise die vergleichsweise große Förderleistung erzielen, welche der Einsatz der Verdrängerpumpe im Rahmen der Wärmerückgewinnung verlangt.

Zur Lagerung des Hubkolbens innerhalb des Faltenbalgs dient dabei etwa eine mit dem Leitungssystem fluidisch gekoppelte röhrenförmige Kammer in Gestalt eines Zylinders. Wird der Faltenbalg in geeigneter Weise mit einer Stirnfläche des Zylinders über einen hermetischen Verschluss verbunden, gewährleistet die beschriebene Formgebung eine sichere Linearführung des Hubkolbens unter Ausschluss jeglicher Kontamination desselben durch den ihn umströmenden Wärmeträger.

Die beschriebene Fluidverbindung zwischen Zylinder und Leitungssystem kann insbesondere mittels eines jeweils ventilgesteuerten Zu- und Ablaufs realisiert werden. In diesem Fall sind die als Rückschlagventile ausgeführten Zu- und Ablaufventile so anzuordnen, dass ihre Durchlassrichtung der Strömungsrichtung des Wärmeträgers innerhalb des Leitungssystems entspricht. Diese Konfiguration vermeidet unerwünschte Richtungsänderungen oder Verwirbelungen des Wärmeträgers.

Der Volumenstrom und damit die Förderleistung der Verdrängerpumpe lässt sich in besonders vorteilhafter Weise durch Einsatz eines Stellgliedes regulieren, welches - etwa in Form eines geeigneten Magnetventils - eine Leerlaufstellung einnehmen kann, in der die Antriebsarbeit des Hubkolbens sich nicht auf den im Leitungssystem befindlichen Wärmeträger auswirkt. Ein solcher Leerlauf lässt sich einerseits durch einen hydraulischen Kurzschluss der Verdrängerpumpe insgesamt, andererseits durch die dynamische Ableitung von Hydraulikflüssigkeit aus dem Faltenbalg erreichen, wobei das Stellglied die entsprechende Kurzschlussoder Ablaufleitung je nach Bedarf freigeben oder für das jeweilige Fluid sperren kann.

Wird das Stellglied in dieser Anordnung mit einem geeigneten Regler kombiniert, so lässt sich der Volumenstrom des Wärmeträgers wirksam dadurch senken, dass der Regler das Stellglied bei jeder Hubbewegung des Kolbens zeitweise in die beschriebene Leerlaufstellung verbringt. Das resultierende Wärmerückgewinnungssystem wird den dynamischen Leistungsanforderungen moderner Motoren gerecht.

Zur Verringerung der Pulsationsneigung empfiehlt es sich, das Wärmerückgewinnungssystem mit einer Mehrzahl derartiger Verdrängerpumpen auszustatten. Dabei bleibt es dem Konstrukteur eines erfindungsgemäßen Wärmerückgewinnungssystems überlassen, ob ein einziges Stellglied auf sämtliche Verdrängerpumpen wirkt oder ob jeder Pumpe ein eigenes Stellglied zugeordnet ist, sodass die Förderleistung der Pumpen getrennt eingestellt werden kann.

Die zum Betrieb der Verdrängerpumpen benötigte Antriebsenergie kann dabei in vorteilhafter Weise von demjenigen Verbrennungsmotor bezogen werden, dessen Abgase den Gegenstand der Wärmerückgewinnung bilden. Alternativ kann zur Steigerung der Leistungsdynamik des Gesamtsystems ein eigener Elektromotor vorgesehen sein, der einen von der Antriebsleistung des Verbrennungsmotors weitestgehend unabhängigen Einsatz des Wärmerückgewinnungssystems erlaubt.
Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: den prinzipiellen Aufbau eines erfindungsgemäßen Wärmerückgewinnungssystems,
- Fig. 2: die Verdrängerpumpen eines Wärmerückgewinnungssystems gemäß einer ersten Ausführungsform der Erfindung,
- Fig. 3: die Verdrängerpumpen eines Wärmerückgewinnungssystems gemäß einer zweiten Ausführungsform der Erfindung,
- Fig. 4: die Verdrängerpumpen eines Wärmerückgewinnungssystems gemäß einer dritten Ausführungsform der Erfindung und
- Fig. 5: die Verdrängerpumpen eines Wärmerückgewinnungssystems gemäß einer vierten Ausführungsform der Erfindung.

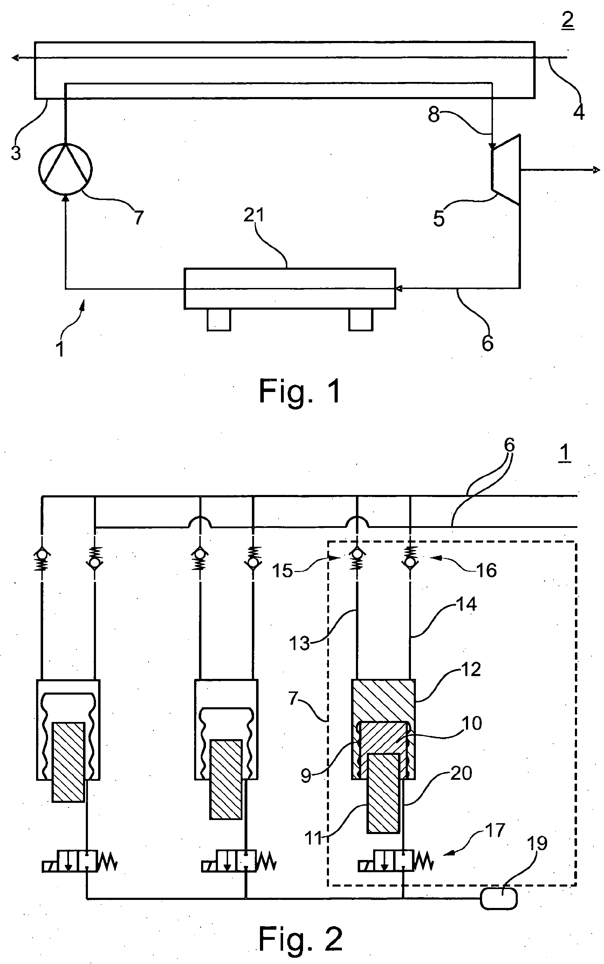

Figur 1 illustriert den grundlegenden Aufbau eines Wärmerückgewinnungssystems 1 gemäß einer Ausführungsform der Erfindung, wie es im Rahmen eines gattungsgemäßen Verbrennungsmotors 2 eingesetzt werden kann. Als Wärmerückgewinnung (WRG, WHR) ist dabei grundsätzlich jegliches Verfahren zur Wiedernutzbarmachung der thermischen Energie eines durch den Verbrennungsprozess erzeugten Massenstromes zu verstehen. Im vorliegenden Szenario wird hierzu ein vom Verbrennungsmotor 2 ausgestoßener Strom von Verbrennungsabgas 4 verwendet.

Zur Übertragung der vom Verbrennungsabgas 4 transportierten thermischen Energie dient der rekuperative Wärmeübertrager 3, welcher den Abgasstrom - durch eine wärmedurchlässige Wand getrennt - an einem Wärmeträger vorbeiführt. Die Strömungsrichtung 8 des Wärmeträgers ist dabei dem Abgasstrom im Wesentlichen entgegen gerichtet, sodass die getrennten Stoffströme innerhalb des Wärmeübertragers 3 Gegenströme im Sinne der Wärmetechnik bilden, die eine Angleichung der Temperatur des Wärmeträgers an jene des Abgases 4 erlauben.

Zwecks Führung des Wärmeträgers innerhalb des Wärmerückgewinnungssystems 1 ist dabei ein zu einem Wärmekreislauf geschlossenes Leitungssystem 6 vorgesehen, in welchem der Wärmeträger im Betrieb des Wärmerückgewinnungssystems 1 einen thermodynamischen Kreisprozess durchläuft. Der als Arbeitsmedium fungierende fluidische Wärmeträger vollzieht in diesem Prozess eine periodische Folge von Zustandsänderungen, die in dieser Darstellung von der Erwärmung mittels des Wärmeübertragers 3 eingeleitet werden. Derart erwärmt durchströmt der Wärmeträger in der vom Leitungssystem 6 vorgegebenen Strömungsrichtung 8 eine Wärmekraftmaschine 5, welche die vom Wärmeträger transportierte Wärmeenergie in Bewegungsenergie umwandelt und so als mechanische Arbeit nutzbar macht. Die Wärmekraftmaschine 5 besitzt vorliegend die Gestalt einer Expansionsmaschine, die durch den typischerweise dampfförmig den Wärmeübertrager 3 verlassenden Wärmeträger angetrieben wird. Eine solche Maschine bedient sich der vom Dampfdruck des Wärmeträgers verkörperten thermodynamischen Energie, indem sie die bei der Ausdehnung des dampfförmigen Wärmeträgers von diesem ausgeübte Expansivkraft auf einen Abtrieb überträgt.

Der mit verringertem Dampfdruck aus der Wärmekraftmaschine 5 austretende Wärmeträger wird nunmehr durch das Leitungssystem 6 in der Strömungsrichtung 8 einem Kondensator 21 zugeführt, welcher den Abdampf der Wärmekraftmaschine 5 erneut verflüssigt. Durch die Rückführung des Wärmeträgers von seinem gasförmigen in den flüssigen Aggregatzustand schließt der Kondensator 21 somit gleichsam den beschriebenen thermodynamischen Kreis des Wärmerückgewinnungssystems 1. Um diesen Kreisprozess aufrechtzuerhalten, sind an geeigneter Position - vorliegend zwischen dem Kondensator 21 und dem von diesem gespeisten Wärmeübertrager 3 - Verdrängerpumpen 7 in das Leitungssystem 6 eingebunden, welche den Wärmeträger in der Strömungsrichtung 8 zirkulieren lassen.

Figur 2 verdeutlicht die Funktionsweise am Beispiel einer Verdrängerpumpe 7 im Einzelnen. So wird erkennbar, dass die Verdrängerpumpe 7 den Wärmeträger über einen Zulauf 13 aus dem Leitungssystem 6 in einen Zylinder 12 ansaugt und über einen komplementären Ablauf 14 unter erhöhtem Druck wieder aus dem Zylinder 12 ausstößt. Um die vorgegebene Strömungsrichtung 8 zu gewährleisten, sind dabei sowohl der Zulauf 13 als auch der Ablauf 14 mit entsprechend ausgerichteten Rückschlagventilen versehen, deren Schließelement in der jeweils unerwünschten Gegenrichtung durch ein elastisches Element in seinen Ventilsitz gedrückt wird.

In diesem Zusammenhang offenbart sich die erfindungswesentliche Trennung des Wärmeträgers vom Antrieb 10, 11 der Verdrängerpumpe 7, welche vorliegend mittels einer als metallischer Faltenbalg ausgebildeter Trennmembran 9 bewirkt wird, die den Pumpenantrieb 10, 11 gegenüber dem den Zylinder 12 durchströmenden Wärmeträger abdichtet. Die Wand des Faltenbalgs wird zu diesem Zweck von einer elastischen, im Ruhezustand zusammengefalteten oder im Ruhezustand gedehnten Metallmembran gebildet, welche die beweglichen Teile des Pumpenantriebs 10, 11 hermetisch gegen den Wärmeträger verschließt. Die Innenseite des Faltenbalgs ist vielmehr mit einer somit stofflich vom Wärmeträger separierten Hydraulikflüssigkeit 10 in Gestalt eines Schmieröls gefüllt, welches - gespeist von einem über eine Ablaufleitung 20 mit dem Faltenbalg verbundenen Ölreservoir 19 - die verschleißarme Lagerung eines Hubkolbens 11 erlaubt. Dieser Hubkolben 11 bildet gemeinsam mit der die verbleibenden Hohlräume des Faltenbalgs im Wesentlichen ausfüllenden Hydraulikflüssigkeit 10 den Pumpenantrieb 10, 11 der Verdrängerpumpe 7, indem er mittels einer oszillierenden Bewegung über die Hydraulikflüssigkeit 10 den Faltenbalg, das heißt die Trennmembran 9 entfaltet und zusammenfaltet. Während in der den Faltenbalg entfaltenden Hubphase der Kolbenbewegung dabei der im Zylinder 12 befindliche Wärmeträger verdrängt und über den Ablauf 14 ausgestoßen wird, erlaubt die entsprechende Senkphase das Nachströmen des Wärmeträgers, der über die Zulauf 13 in den Zylinder 12 angesaugt wird. Eine weitere Besonderheit der Erfindung verkörpert indes ein - mittels eines nicht dargestellten Reglers angesteuerte - Stellglied 17, das während der beschriebenen Hubbewegung des Hubkolbens 11 zur Reduzierung der Förderleistung der Verdrängerpumpe 7 Letztere in einen Leerlauf versetzen kann. Als Stellglied, Stelleinrichtung, Aktor oder Aktuator ist dabei im Grundsatz jede Einrichtung zu verstehen, die eine Beeinflussung der Förderleistung im beschriebenen Sinne erlaubt. Vorliegend wird als Stellglied 17 ein Ventil verwendet, welches das Abfließen von Hydraulikflüssigkeit 10 durch die Ablaufleitung 20 in Richtung des Flüstels einer als metallischer Faltenbalg ausgebildeter Trennmembran 9 bewirkt wird, die den Pumpenantrieb 10, 11 gegenüber dem den Zylinder 12 durchströmenden Wärmeträger abdichtet. Die Wand des Faltenbalgs wird zu diesem Zweck von einer elastischen, im Ruhezustand zusammengefalteten oder im Ruhezustand gedehnten Metallmembran gebildet, welche die beweglichen Teile des Pumpenantriebs 10, 11 hermetisch gegen den Wärmeträger verschließt. Die Innenseite des Faltenbalgs ist vielmehr mit einer somit stofflich vom Wärmeträger separierten Hydraulikflüssigkeit 10 in Gestalt eines Schmieröls gefüllt, welches - gespeist von einem über eine Ablaufleitung 20 mit dem Faltenbalg verbundenen Ölreservoir 19 - die verschleißarme Lagerung eines Hubkolbens 11 erlaubt.

Dieser Hubkolben 11 bildet gemeinsam mit der die verbleibenden Hohlräume des Faltenbalgs im Wesentlichen ausfüllenden Hydraulikflüssigkeit 10 den Pumpenantrieb 10, 11 der Verdrängerpumpe 7, indem er mittels einer oszillierenden Bewegung über die Hydraulikflüssigkeit 10 den Faltenbalg, das heißt die Trennmembran 9 entfaltet und zusammenfaltet. Während in der den Faltenbalg entfaltenden Hubphase der Kolbenbewegung dabei der im Zylinder 12 befindliche Wärmeträger verdrängt und über den Ablauf 14 ausgestoßen wird, erlaubt die entsprechende Senkphase das Nachströmen des Wärmeträgers, der über die Zulauf 13 in den Zylinder 12 angesaugt wird.

Eine weitere Besonderheit der Erfindung verkörpert indes ein - mittels eines nicht dargestellten Reglers angesteuerte - Stellglied 17, das während der beschriebenen Hubbewegung des Hubkolbens 11 zur Reduzierung der Förderleistung der Verdrängerpumpe 7 Letztere in einen Leerlauf versetzen kann. Als Stellglied, Stelleinrichtung, Aktor oder Aktuator ist dabei im Grundsatz jede Einrichtung zu verstehen, die eine Beeinflussung der Förderleistung im beschriebenen Sinne erlaubt. Vorliegend wird als Stellglied 17 ein Ventil verwendet, welches das Abfließen von Hydraulikflüssigkeit 10 durch die Ablaufleitung 20 in Richtung des Flüssigkeitsreservoirs 19 sperren oder freigeben kann. Konkret ist dies das in Figur 2 abgebildete 2/2-Wege-Ventil, welches elektrisch oder - etwa als schnell schaltendes Magnetventil - elektromagnetisch durch den Regler betätigt werden mag. Denkbar wäre auch der Einsatz eines Proportionalventils das Zwischenstellungen ermöglicht und somit Regelmöglichkeiten insbesondere für mehrere Hubkolben ermöglicht.

Im Szenario der Figur 2 ist das Stellglied 17 zu diesem Zweck in die Ablaufleitung 20 eingebettet, welche es in seiner Ausgangsstellung für aus dem Zylinder 12 in Richtung des Flüssigkeitsreservoirs 19 zurückströmende Hydraulikflüssigkeit 10 versperrt, sodass sich die Hubbewegung des Hubkolbens 11 hydromechanisch auf den Faltenbalg und über diesen auf den im Zylinder 12 befindlichen Wärmeträger überträgt. Wird das Stellglied 17 nunmehr in seine Leerlaufstellung versetzt, so gibt es die Ablaufleitung 20 in Richtung des Flüssigkeitsreservoirs 19 für abfließende Hydraulikflüssigkeit 10 frei, sodass eine Hubbewegung des Hubkolbens 11 den Faltenbalg nicht in gewohntem Maße anlenkt und somit zu einem verringerten Ausstoß des Wärmeträgers aus dem Zylinder 12 und entsprechend reduziertem Volumenstrom führt. Zwei weitere, mittels einer Taumelscheibe (nicht dargestellt) reihum angehobene weitere Kolben bedienen in analoger Funktionsweise weitere Faltenbalgpumpen, welche jeweils über ein eigenes Stellglied dieser Art verfügen.

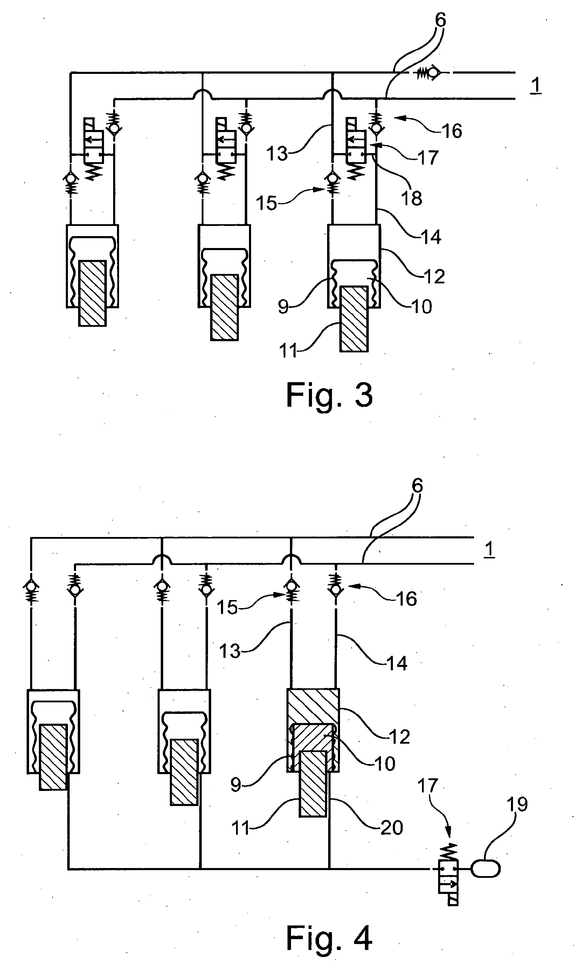

Die alternative Ausführungsform der Figur 3 verwendet eine abweichende Konfiguration des Stellglieds 17, das nunmehr in eine den Zulauf 13 mit dem Ablauf 14 verbindenden Kurzschlussleitung 18 eingebettet ist. In seiner - der maximalen Förderleistung der Verdrängerpumpe 7 entsprechenden - Ausgangsstellung verhindert das Stellglied 17 dabei das Zurückströmen des vom Faltenbalg während der Hubbewegung des Hubkolbens 11 verdrängten Wärmeträgers über den Ablauf 14, die Kurzschlussleitung 18 und den Zulauf 13 in den Zylinder 12 durch ein Absperren der Kurzschlussleitung 18. Wird das Stellglied hingegen in seine Leerlaufstellung versetzt, so gibt es die Kurzschlussleitung 18 in der beschriebenen Durchflussrichtung für den aus dem Zylinder 12 ausgestoßenen Wärmeträger frei, sodass sich ein Zustand ergibt, welcher in der Fluidtechnik als hydraulischer Kurzschluss bezeichnet wird. Dabei wird ein Teil des Wärmeträgers in einem vom Leitungssystem getrennten Kreislauf 11, 14, 18, 13, 11 geführt, sodass sich eine entsprechend verminderte Förderleistung des Wärmerückgewinnungssystems 1 ergibt.

Die Funktionsweise der Anordnung gemäß Figur 4 entspricht dabei weitgehend jener der Figur 2 mit dem Unterschied, dass nicht jeder einzelnen der drei gezeigten Verdrängerpumpen ein eigenes Stellglied zugeordnet, sondern ein auf sämtliche Verdrängerpumpen wirkendes Stellglied im gemeinsamen Teil der Ablaufleitung 20 eingebettet ist.

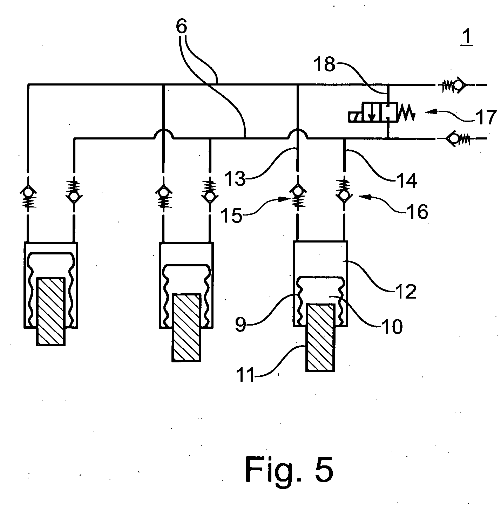

Analog weist das Wärmerückgewinnungssystem 1 der Figur 5 lediglich ein einziges Stellglied 17 auf, das - in einer der Konfiguration gemäß Figur 2 entsprechenden Weise - auf eine jeweils gemeinsame Abschnitte des Zulaufs 13 und Ablaufs 14 sämtlicher Verdrängerpumpen verbindende Kurzschlussleitung 18 wirkt.

## Patentansprüche

1. Wärmerückgewinnungssystem (1) für einen Verbrennungsmotor (2) mit
- einem von einem fluidischen Wärmeträger durchströmten Wärmeübertrager (3) zum Übertragen der Wärme von einem Verbrennungsabgas (4) des Verbrennungsmotors (2) auf den Wärmeträger,
- einer von dem Wärmeträger durchströmten Wärmekraftmaschine (5) zum Umwandeln der auf den Wärmeträger übertragenen Wärme in eine mechanische Arbeit,
- einem im Wesentlichen zyklisch geschlossenen Leitungssystem (6) zum Verbinden des Wärmeübertragers mit der Wärmekraftmaschine (5),
- mindestens einer Verdrängerpumpe (7) zum Fördern des Wärmeträgers durch das Leitungssystem (6) in einer vorgegebenen Strömungsrichtung (8) und
- einem Pumpenantrieb (10, 11) zum Antreiben der Verdrängerpumpe (7), **gekennzeichnet durch**
eine undurchlässige Trennmembran (9) zum fluiddichten Trennen des Wärmeträgers von dem Pumpenantrieb (10, 11).

2. Wärmerückgewinnungssystem nach Anspruch 1,
**dadurch gekennzeichnet,**
**dass** die Trennmembran (9) eine Metallmembran ist.
oder
**dass** die Trennmembran (9) aus einem Kunststoff ist.

3. Wärmerückgewinnungssystem nach Anspruch 2,
**gekennzeichnet durch**
einen den Pumpenantrieb (10, 11) umschließenden Faltenbalg mit einer Wand, welche die Trennmembran (9) bildet.

4. Wärmerückgewinnungssystem nach Anspruch 3,
**dadurch gekennzeichnet,**
**dass** der Pumpenantrieb (10, 11) eine den Faltenbalg im Wesentlichen ausfüllende Hydraulikflüssigkeit (10), insbesondere ein Schmieröl, und einen in der Hydraulikflüssigkeit (10) beweglich gelagerten Hubkolben (11) umfasst, sodass eine Hubbewegung des Hubkolbens (11) den Faltenbalg mittels der Hydraulikflüssigkeit (10) hydromechanisch entfaltet.

5. Wärmerückgewinnungssystem nach Anspruch 4,
**dadurch gekennzeichnet,**
**dass** die Verdrängerpumpe (7) einen mit dem Leitungssystem (6) in Fluidverbindung stehenden Zylinder (12) aufweist, in welchem der Hubkolben (11) lagert.

6. Wärmerückgewinnungssystem nach Anspruch 5,
**dadurch gekennzeichnet,**
**dass** die Verdrängerpumpe (7)
- einen Zulauf (13) zum Ansaugen des Wärmeträgers und
- einen Ablauf (14) zum Ausstoßen des Wärmeträgers
umfasst, welche den Zylinder (12) mit dem Leitungssystem (6) verbinden.

7. Wärmerückgewinnungssystem nach Anspruch 6,
**dadurch gekennzeichnet,**
**dass** die Verdrängerpumpe (7)
- ein Zulaufventil (15) zum Absperren des Zulaufs (13) und
- ein Ablaufventil (16) zum Absperren des Ablaufs (14)
umfasst, wobei das Zulaufventil (15) und das Ablaufventil (16) federbelastete Rückschlagventile sind und jeweils eine Durchlassrichtung aufweisen, welche der Strömungsrichtung (8) entspricht.

8. Wärmerückgewinnungssystem nach Anspruch 7,
**gekennzeichnet durch**
ein Stellglied (17), insbesondere ein Magnetventil, mit
- einer Ausgangsstellung, in welcher die Verdrängerpumpe (7) den Wärmeträger durch das Leitungssystem (6) fördert und
- einer Leerlaufstellung, in welcher die Verdrängerpumpe (7) den Wärmeträger nicht **durch** das Leitungssystem (6) fördert.

9. Wärmerückgewinnungssystem nach Anspruch 8,
**dadurch gekennzeichnet,**
**dass** das Stellglied (17) ein Proportionalventil mit mind. 3 verschiedenen einstellbaren Öffnungsstellungen ist.

10. Wärmerückgewinnungssystem nach Anspruch 8 oder 9,
**gekennzeichnet durch**
eine den Zulauf (13) mit dem Ablauf (14) fluidisch verbindende Kurzschlussleitung (18) zum hydraulischen Kurzschließen der Verdrängerpumpe (7), wobei das Stellglied (17) so konfiguriert ist, dass es
- in der Ausgangsstellung die Kurzschlussleitung (18) absperrt und
- in der Leerlaufstellung die Kurzschlussleitung (18) in Richtung des Zulaufs (13) freigibt.

11. Wärmerückgewinnungssystem nach einem der Ansprüche 8, 9 oder 10, **gekennzeichnet durch**
eine den Faltenbalg mit einem Flüssigkeitsreservoir (19) fluidisch verbindende Ablaufleitung (20) zum Ableiten der Hydraulikflüssigkeit (10) aus dem Faltenbalg, wobei das Stellglied (17) so konfiguriert ist, dass es
- in der Ausgangsstellung die Ablaufleitung (20) absperrt und
- in der Leerlaufstellung die Ablaufleitung (20) in Richtung des Flüssigkeitsreservoirs (19) freigibt.

12. Wärmerückgewinnungssystem nach einem der Ansprüche 8 bis 11, **gekennzeichnet durch**
einen mit dem Stellglied (17) verbundenen Regler zum Regeln einer Förderleistung der Verdrängerpumpe (7), derart konfiguriert, dass das Stellglied (17) während der Hubbewegung des Hubkolbens (11) die Leerlaufstellung einnimmt, wenn die Förderleistung gesenkt werden soll.

13. Wärmerückgewinnungssystem nach einem der Ansprüche 1 bis 12, **gekennzeichnet durch**
mehrere, insbesondere drei, Verdrängerpumpen (7) mit jeweils einem Stellglied (17), welches auf die Verdrängerpumpe (7) wirkt.

14. Wärmerückgewinnungssystem nach einem der Ansprüche 1 bis 12, **gekennzeichnet durch**
mehrere, insbesondere drei, Verdrängerpumpen (7) und ein gemeinsames Stellglied (17), welches auf jede Verdrängerpumpe (7) wirkt.

15. Wärmerückgewinnungssystem nach einem der Ansprüche 1 bis 14, **dadurch gekennzeichnet, dass**
- dass der Pumpenantrieb (10, 11) mechanisch mit dem Verbrennungsmotor (2) verbunden ist
oder
- dass der Pumpenantrieb (10,11) mechanisch mit einem Elektromotor verbunden ist.

## Claims

1. Heat recovery system (1) for an internal combustion engine (2) comprising
- a heat transfer device (3) flowed through by a fluid heat carrier, for transferring the heat from a combustion exhaust gas (4) of the internal combustion engine (2) to the heat carrier,
- a heat power machine (5) flowed through by the heat carrier for converting the heat transferred to the heat carrier into mechanical work,
- a substantially cyclically closed duct system (6) for connecting the heat transfer device to the heat power machine (5),
- at least one displacement pump (7) for conveying the heat carrier through the duct system (6) in a predetermined flow direction (8) and
- a pump drive (10,11) for driving the displacement pump (7),
**characterised by** an impermeable separating membrane (9) for separating the heat carrier from the pump drive (10, 11) in a fluid-tight manner.

2. Heat recovery system according to claim 1, **characterised in that** the separating membrane (9) is a metal membrane or the separating membrane (9) is made of plastic.

3. Heat recovery system according to claim 2, **characterised by** bellows surrounding the pump drive (10, 11), the bellows having a wall that forms the separating membrane (9).

4. Heat recovery system according to claim 3, **characterised in that** the pump drive (10, 11) comprises a hydraulic fluid (10) substantially filling the bellows, in particular a lubricating oil, and a reciprocating piston (11) movably mounted in the hydraulic fluid (10), so that a stroke movement of the reciprocating piston (11) unfolds the bellows hydromechanically by means of the hydraulic fluid (10).

5. Heat recovery system according to claim 4, **characterised in that** the displacement pump (7) has a cylinder (12) in fluid connection with the duct system (6), in which cylinder the reciprocating piston (11) is mounted.

6. Heat recovery system according to claim 5, **characterised in that** the displacement pump (7) comprises
- a feed (13) for aspirating the heat carrier and
- a discharge (14) for discharging the heat carrier, which connect the cylinder (12) to the duct system (6).

7. Heat recovery system according to claim 6, **characterised in that** the displacement pump (7) comprises
- a feed valve (15) for blocking the feed (13) and
- a discharge valve (16) for blocking the discharge (14), wherein the feed valve (15) and the discharge valve (16) are spring-loaded check valves and each have a passage direction which corresponds to the flow direction (8).

8. Heat recovery system according to claim 7, **characterised by** an actuating element (17), in particular a magnetic valve, with
- a starting position, in which the displacement pump (7) conveys the heat carrier through the duct system (6) and
- an idle position, in which the displacement pump (7) does not convey the heat carrier through the duct system (6).

9. Heat recovery system according to claim 8, **characterised in that** the actuating element (17) is a proportional valve with at least 3 different adjustable opening positions.

10. Heat recovery system according to either claim 8 or claim 9, **characterised by** a short circuit line (18) fluidly connecting the feed (13) to the discharge (14) to hydraulically short circuit the displacement pump (7), wherein the actuating element (17) is configured so that
- in the starting position it blocks the short circuit line (18), and
- in the idle position it frees the short circuit line (18) in the direction of the feed (13).

11. Heat recovery system according to any one of claims 8, 9 or 10, **characterised by** a discharge duct (20) fluidly connecting the bellows to a fluid reservoir (19) for discharging the hydraulic fluid (10) from the bellows, wherein the actuating element (17) is configured so that
- in the starting position it blocks the discharge duct (20) and
- in the idle position it frees the discharge duct (20) in the direction of the fluid reservoir (19).

12. Heat recovery system according to any one of claims 8 to 11, **characterised by** a regulator connected to the actuating element (17), for regulating a conveying capacity of the displacement pump (7), the regulator being configured such that the actuating element (17) during the stroke movement of the reciprocating piston (11) assumes the idle position when the conveying capacity is to be reduced.

13. Heat recovery system according to any one of claims 1 to 12, **characterised by** a plurality, in particular three, displacement pumps (7) each with an actuating element (17) which acts on the displacement pump (7).

14. Heat recovery system according to any one of claims 1 to 12, **characterised by** a plurality, in particular three, displacement pumps (7) and a joint actuating element (17), which acts on each displacement pump (7).

15. Heat recovery system according to any one of claims 1 to 14, **characterised in that**
- the pump drive (10, 11) is connected mechanically to the internal combustion engine (2) or
- the pump drive (10,11) is connected mechanically to an electric motor.

## Revendications

1. Système de récupération de chaleur (1) pour un moteur à combustion interne (2) avec
- un échangeur de chaleur (3) parcouru par un agent caloporteur fluidique pour la transmission de chaleur d'un gaz de combustion (4) du moteur à combustion interne (2) à l'agent caloporteur,
- un moteur thermique (5) parcouru par l'agent caloporteur pour la conversion de la chaleur transmise à l'agent caloporteur en un travail mécanique,
- un système de conduite (6) fermée sensiblement cycliquement pour la liaison de l'échangeur de chaleur avec le moteur thermique (5),
- au moins une pompe volumétrique (7) pour le transport de l'agent caloporteur par le système de conduite (6) dans un sens d'écoulement prescrit (8) et
- un entraînement de pompe (10, 11) pour l'entraînement de la pompe volumétrique (7),
**caractérisé par**
une membrane de séparation (9), imperméable pour la séparation étanche au fluide de l'agent caloporteur par rapport à l'entraînement de pompe (10, 11).

2. Système de récupération de chaleur selon la revendication 1,
**caractérisé en ce**
**que** la membrane de séparation (9) est une membrane métallique
ou
**que** la membrane de séparation (9) est en un plastique.

3. Système de récupération de chaleur selon la revendication 2,
**caractérisé par**
un soufflet entourant l'entraînement de pompe (10, 11) avec une paroi qui forme la membrane de séparation (9).

4. Système de récupération de chaleur selon la revendication 3,
**caractérisé en ce**
**que** l'entraînement de pompe (10, 11) comporte un liquide hydraulique (10) remplissant sensiblement le soufflet, en particulier une huile lubrifiante, et un piston alternatif (11) logé de manière mobile dans le liquide hydraulique (10) de sorte qu'un mouvement de levage du piston alternatif (11) déploie hydromécaniquement le soufflet à l'aide du liquide hydraulique (10).

5. Système de récupération de chaleur selon la revendication 4,
**caractérisé en ce**
**que** la pompe volumétrique (7) présente un cylindre (12) se trouvant en liaison fluidique avec le système de conduite (6), dans lequel le piston alternatif (11) loge.

6. Système de récupération de chaleur selon la revendication 5,
**caractérisé en ce**
**que** la pompe volumétrique (7) comporte
- une amenée (13) pour l'aspiration de l'agent caloporteur et
- une évacuation (14) pour le rejet de l'agent caloporteur, lesquelles relient le cylindre (12) au système de conduite (6).

7. Système de récupération de chaleur selon la revendication 6,
**caractérisé en ce**
**que** la pompe volumétrique (7) comporte
- une soupape d'amenée (15) pour l'obturation de l'amenée (13) et
- une soupape d'évacuation (16) pour l'obturation de l'évacuation (14), la soupape d'amenée (15) et la soupape d'évacuation (16) étant des clapets antiretour sollicités par ressort et présentant chacune un sens de passage qui correspond au sens d'écoulement (8).

8. Système de récupération de chaleur selon la revendication 7,
**caractérisé par**
un organe de réglage (17) en particulier une soupape magnétique avec
- une position de départ, dans laquelle la pompe volumétrique (7) transporte l'agent caloporteur par le système de conduite (6) et
- une position de point mort, dans laquelle la pompe volumétrique (7) ne transporte pas l'agent caloporteur par le système de conduite (6).

9. Système de récupération de chaleur selon la revendication 8,
**caractérisé en ce**
**que** l'organe de réglage (17) est une soupape proportionnelle avec au moins trois différentes positions d'ouverture réglables.

10. Système de récupération de chaleur selon la revendication 8 ou 9,
**caractérisé par**
une conduite de court-circuit (18) reliant fluidiquement l'amenée (13) à l'évacuation (14) pour le court-circuitage hydraulique de la pompe volumétrique (7), l'organe de réglage (17) étant configuré de sorte qu'il
- obture dans la position de départ la conduite de court-circuit (18) et
- libère dans la position de point mort la conduite de court-circuit (18) en direction de l'amenée (13).

11. Système de récupération de chaleur selon l'une quelconque des revendications 8, 9 ou 10,
**caractérisé par**
une conduite d'évacuation (20) reliant fluidiquement le soufflet à un réservoir de liquide (19) pour dériver du liquide hydraulique (10) hors du soufflet, l'organe d'actionnement (17) étant configuré de sorte qu'il
- obture dans la position de départ la conduite d'évacuation (20) et
- libère dans la position de point mort la conduite d'évacuation (20) en direction du réservoir de liquide (19) .

12. Système de récupération de chaleur selon l'une quelconque des revendications 8 à 11,
**caractérisé par**
un régulateur relié à l'organe de réglage (17) pour la régulation d'un débit de la pompe volumétrique (7) configuré de telle manière que l'organe de réglage (17) occupe pendant le mouvement de levage du piston alternatif (11) la position de point mort lorsque le débit doit être réduit.

13. Système de récupération de chaleur selon l'une quelconque des revendications 1 à 12,
**caractérisé par**
plusieurs, en particulier trois pompes volumétriques, (7) avec respectivement un organe de réglage (17) qui agit sur la pompe volumétrique (7).

14. Système de récupération de chaleur selon l'une quelconque des revendications 1 à 12,
**caractérisé par**
plusieurs, en particulier trois pompes volumétriques (7) et un organe de réglage commun (17) qui agit sur chaque pompe volumétrique (7).

15. Système de récupération de chaleur selon l'une quelconque des revendications 1 à 14,
**caractérisé en ce**
- **que** l'entraînement de pompe (10, 11) est relié mécaniquement au moteur à combustion interne (2)
ou
- **que** l'entraînement de pompe (10, 11) est relié mécaniquement à un moteur électrique.
